# EUROPÄISCHE PATENTSCHRIFT

(11) **EP 3 090 831 B1**
(45) Veröffentlichungstag und Bekanntmachung des Hinweises auf die Patenterteilung: **26.01.2022**
(21) Anmeldenummer: 16167743.0
(22) Anmeldetag: 29.04.2016
(51) Int. Cl.: B23Q 3/157, B23Q 11/08

(54) **WERKZEUGSCHNELLWECHSELSYSTEM MIT SPÄNELEITEINRICHTUNG**
QUICK-CHANGE TOOL SYSTEM WITH CHIP GUIDE DEVICE
SYSTÈME DE CHANGEMENT RAPIDE D'OUTIL COMPRENANT UN DISPOSITIF DE GUIDAGE DE COPEAUX

(30) Priorität: 06.05.2015 DE 202015003373 U
(43) Veröffentlichungstag der Anmeldung: 09.11.2016
(73) Patentinhaber: HOMAG GmbH, 72296 Schopfloch (DE)
(72) Erfinder: Martinetz, Jörg, 72280 Dornstetten (DE); Calmbach, Martin, 72160 Horb-Dießen (DE)
(74) Vertreter: Hoffmann Eitle

(56) Entgegenhaltungen:
- EP-A1- 1 985 396
- EP-A1- 2 420 347
- EP-A2- 0 407 836
- EP-A2- 0 955 125
- DE-A1- 10 136 996
- DE-T1- 4 480 343
- DE-T2- 60 013 853
- JP-A- H10 113 839
- JP-A- 2002 036 056

## Beschreibung

### Technisches Gebiet

Die Erfindung betrifft die Verwendung eines Werkzeugschnellwechselsystems gemäß dem Oberbegriff des Patentanspruchs 1 für Werkzeugmaschinen zur Bearbeitung von bevorzugt plattenförmigen Werkstücken, die bevorzugt zumindest abschnittsweise aus Holz, Holzwerkstoffen oder Kunststoff bestehen. Das System umfasst eine Werkzeugschnittstelle zum Ein- und Auswechseln von Bearbeitungswerkzeugen, eine Drehmomentstütze, die drehfest mit einer Werkzeugaufnahme der Werkzeugmaschine verbindbar ist, und eine Späneleiteinrichtung mit einem Späneleitkörper, welcher die Späne nach dem Trennen vom Werkstück ableitet und mit der Drehmomentstütze fest verbunden ist.

### Stand der Technik

Bei der maschinellen Bearbeitung von Werkstücken, die bevorzugt aus Holz, Holzwerkstoffen, Kunststoffen oder dergleichen bestehen, entstehen Späne im Arbeitsbereich der Maschine. Um diese Späne zu bündeln und in eine Absaugung oder einen anderen Abtransport zu leiten, werden Späneleitbleche eingesetzt. Diese Abweiser sind meist so gestaltet, dass sie das Werkzeug zu einem Teil um die axiale Achse umschließen, ohne dass die Bearbeitungsfähigkeit/- freiheit eingeschränkt ist. Die Verbindung zur Werkzeugmaschine findet meist über den Fräskopf statt. So ist sichergestellt, dass bei Drehung des Fräskopfes, d.h. zum Beispiel bei Nachfahren einer Kurvenbahn, der Abweiser mitgeführt wird.

Bestehende Aggregate, wie zum Beispiel aus der
DE 299 07 571 U1 bekannt, bilden eine fest verbaute Einheit aus Aggregatflansch mit Späneleitblech und gelagertem Werkzeugdorn. Am Markt befindliche, unterschiedliche Werkzeugsysteme können somit nur auf einem eigens für das jeweilige Werkzeugsystem angefertigten Werkzeugdorn befestigt werden. Dadurch entsteht zur Abdeckung aller gängigen Werkzeugsysteme eine hohe Varianz an Aggregaten.

Darüber hinaus sind aus der EP 2 251 141 A1 Systeme bekannt, die das Werkzeug komplett umschließen, um so sicherzustellen, dass die großen Mengen an entstanden Spänen bestmöglich abgesaugt werden. Dabei ist die Absaughaube vom Spannfutter des Werkzeugs entkoppelt, um eine lagerlose Konstruktion zu schaffen. Das Werkzeug kann mithilfe des Spannfutters mühelos und ohne große Umbauten ausgetauscht werden. Aggregate dieser Bauart haben allerdings den Nachteil, dass die seitliche Bearbeitung eines Werkstückes nicht möglich ist, oder aber die Späne nicht richtig in die Absaugeinrichtung geleitet werden, da diese seitlich ausgeschmissen werden und die Absaugung zu hoch hängt. Zusätzlich können auch hier nur Werkzeuge verwendet werden, die in das integrierte Spannfutter passen. Bei einer Änderung des Spannfutters müsste eine Anpassung der Absaughaube stattfinden, bzw. eine weitere Variante vorhanden sein. Das heißt, die in den Patentschriften dargestellten Späneleitbleche sind nur bedingt auf die eingesetzten Werkzeugsysteme anpassbar und damit nur verbunden wirksam.

Die DE 101 36 996 A1 offenbart ein Werkzeug zur spanenden Bearbeitung von Werkstücken mit einer Absaughaube zum Abtransport der entstehenden Späne. Es zeichnet sich dadurch aus, dass die Absaughaube eine Turbine umfasst.

Die DE 44 80 343 T1 offenbart eine für eine Werkzeugmaschine ausgelegte Vorrichtung zum Entfernen von Spänen.

Eine Verwendung eines Werkzeugschnellwechselsystems gemäß dem Oberbegriff des Patentanspruchs 1 ist aus der EP 0 407 836 A2 bekannt.

### Darstellung der Erfindung

Es ist daher Aufgabe der vorliegenden Erfindung, unabhängig von den auf dem Markt bestehenden Werkzeugsystemen unterschiedlicher Hersteller eine Werkzeugschnittstelle mit Späneleiteinrichtung anbieten zu können. Mit der Erfindung können unabhängig von bestehenden Werkzeugsystemen, einzelne, wechselbare Werkzeugschnittstellen mit Späneleiteinrichtung und einem beliebigen Werkzeugsystem kombiniert werden. Dabei kann ein auf der Werkzeugschnittstelle montiertes Werkzeugsystem vom restlichen System getrennt werden, ohne dieses demontieren zu müssen. Hierdurch kann anschließend das Werkzeug samt Werkzeugschnittstelle zum Beispiel einer Reinigung unterzogen werden.

Eine erfindungsgemäße Verwendung eines Werkzeugschnellwechselsystems ist durch die Merkmalskombination des Anspruchs 1 definiert. Abhängige Ansprüche beziehen sich auf bevorzugte Ausführungsformen.

Eine Werkzeugschnittstelle, an der zum Beispiel ein Fräser montiert ist, kann über ein Fixierelement, beispielsweise eine Wellenmutter, schnell von der Drehmomentstütze getrennt werden kann. Dabei kann die Schnittstelle zwischen Werkzeugmaschine und Werkzeugschnittstelle beispielsweise eine HSK-Schnittstelle sein, welche sehr schnell gelöst und fixiert werden kann.

Durch die Trennbarkeit der Werkzeugschnittstelle von der restlichen Struktur wird darüber hinaus das Wuchten der auf einem beliebigen Werkzeugaufnahmesystem montierten Werkzeuge erleichtert, da diese dort montiert verbleiben können. Einbaubedingte Unwucht kann aufgrund der Rotationssymmetrie von Schnittstelle und Drehmomentstütze nicht entstehen. Die leichte Trennbarkeit des Systems ist auch bei der Reinigung der Werkzeuge bedeutend. Diese können ohne aufwendige Umbauarbeiten und Vorsichtsmaßnahme zum Beispiel in ein wasserbasierendes Ultraschallbad vollständig eingetaucht werden.

Der Rundlauf und die Stabilität der Werkzeugschnittstelle werden dabei durch eine Lagereinheit sichergestellt, zu der beispielsweise über eine Hohlwelle ein Reib- und Formschluss besteht. Diese gelagerte Hohlwelle ist maßlich so ausgeführt, dass die gesamte Werkzeugschnittstelle, samt dem Werkzeugaufnahmesystem, bevorzugt direkt ein Werkzeugdorn oder ein HSK-Adapter, eingeschoben und mittels vorher beschriebener Fixierung an der restlichen Struktur befestigt werden kann. Durch die doppelte HSK-Aufnahme der oben beschriebenen Werkzeugschnittstelle ist es möglich, diese als Adapter zu einer weiteren Werkzeugschnittstelle mit HSK-Aufnahme und Dorn zu verwenden. So muss das Fixierelement nicht gelöst werden und die Austauschbarkeit des Werkzeuges wird nochmals erleichtert. Die genaue Ausführung des Bereichs unterhalb der Hohlwelle kann aber auch von den Werkzeugherstellern entsprechend Ihrer Systeme gestaltet und selbst gefertigt werden.

Die Trennbarkeit der Werkzeugschnittstelle wird durch ein oder mehrere Fixierelemente erreicht, wie beispielsweise eine Wellenmutter, die so angeordnet sind, dass die Werkzeugschnittstelle nicht aus der Drehmomentstütze herausfallen kann. Dies wird zum Beispiel durch ein Verkeilen des Fixierelements mit der Hohlwelle erreicht, so dass die Hohlwelle verjüngt wird, diese auf die Werkzeugschnittstelle presst und damit die Haftreibung erhöht wird und es zu einem Reibschluss kommt. Gleichzeitig bewirkt das Anziehen dieses Fixierelements, dass die Schnittstelle durch eine Wellenschulter eine definierte Position erreicht und über diesen Formschluss fest und planar mit der Lagereinheit verbunden ist. Der Vorteil dieser Befestigung ist, dass durch dieses eine Fixierelement ein schnelles Lösen der Werkzeugschnittstelle möglich ist und dadurch die Rüstzeiten stark verringert werden können. Die Montage und Demontage der Schnittstelle an die Werkzeugmaschine kann dabei bei montierter oder demontierter Drehmomentstütze mit Späneleiteinrichtung erfolgen. Ein weiterer Vorteil dieser Trennung ist, dass die einwechselbare Werkzeugschnittstelle unabhängig von bzw. ohne die Drehmomentstütze samt Späneleiteinrichtung betrieben werden kann.

Neben den Befestigungen von Werkzeugschnittstelle zur Drehmomentstütze und von Werkzeugschnittstelle zu Werkzeugmaschine, muss die Drehmomentstütze an der Werkzeugmaschine befestigt werden. Dafür ist mindestens eine Befestigungseinrichtung, wie ein Arretierbolzen, vorgesehen, die sich an der oberen Seite des Gehäuses der Drehmomentstütze und axial parallel zur Drehachse (Hauptachse), in der C-Achse, der Werkzeugschnittstelle befindet. An mindestens einer dieser Befestigungseinrichtungen befindet sich eine Mitnahmeeinrichtung, beispielsweise ein Stift. Diese Mitnahmeeinrichtung befindet sich auf derselben Achse wie die Befestigungseinrichtung, ist zu einem Teil in dieser versenkt und besitzt in Richtung Werkzeugmaschine und entlang der Hauptachse Übermaß. Mittels dieser Mitnahmeeinrichtung und Fixierung, von Drehmomentstütze und Werkzeugmaschine, wird die Späneleiteinrichtung um die Hauptachse des Werkzeugkopfes drehbar. Der Späneleitkörper wird rotatorisch um die C-Achse mitgeführt. Somit bleibt der Körper relativ gesehen immer in derselben Position zum Werkzeug, der Spanflug kann optimal minimiert werden und es kommt nicht zur Kollision mit dem Werkstück.

Eine technisch wenig aufwendige und trotzdem sehr effektive Ausgestaltung des Späneleitkörpers sieht vor, dass der Körper das Werkzeug über einen Teilbereich umgibt. Damit wird erreicht, dass die aus dem Werkzeug mit hoher kinetischer Energie fliegenden Späne gezielt aufgefangen und unter Ausnutzung der verbleibenden kinetischen Restenergie mittels der Späneleitfläche des Späneleitkörpers vom Werkzeug und Werkstück abgeleitet werden.

Zur besseren Kontrolle und besseren Leitung des Spanflugs ist die Späneleitfläche des Späneleitkörpers in mindestens zwei Bereiche geteilt. Der Bereich nahe dem Werkzeug besitzt eine geradlinige Form. Dieser Bereich stellt eine exakte Einstellbarkeit des Körpers sicher. Der zweite Bereich, der sich dem Ersten anschließt, besitzt eine gewölbte Form, um das Werkzeug zu einem Teil zu umschließen. Am unteren Ende, an dem auch das Werkzeug abschließt, befindet sich ein Ausschnitt, der einen Teil einer Bogenkurve darstellt. Dieser dient zum Auswerfen der Späne. Aufgrund der Form des Späneleitkörpers, kann das Werkzeug ohne Demontage oder Verstellung der Späneleiteinrichtung ausgetauscht werden.

Zum Befestigen des Werkzeugs kann die Werkzeugschnittstelle maschinenseitig eine HSK-Aufnahme und werkzeugseitig eine weitere Aufnahme, wie zum Beispiel eine HSK-F63 Aufnahme oder einen Dorn, besitzen. Für weitere Werkzeugspannsysteme kann die werkzeugseitige Werkzeugschnittstelle angepasst werden. Der Vorteil ist, dass keine Abhängigkeit der Werkzeugaufnahme der Werkzeugmaschine bei Geometrieänderungen von Werkzeugspannsystemen durch die jeweiligen Hersteller besteht. Die vorhandene Späneleiteinrichtung kann weiterhin verwendet werden, und nur die Schnittstelle wird verändert. Aufgrund der beschriebenen Trennung von anpassbarer Werkzeugschnittstelle und der standardisierten Drehmomentstütze mit der Späneleiteinrichtung, wird eine niedrige Varianz von Werkzeugschnittstellen mit Späneleiteinrichtungen geschaffen. Das heißt, der Aufbau der Späneleiteinrichtung und Drehmomentstütze weist eine Werkzeugmaschinen- und werkzeugherstellerunabhängige Konstruktion auf. Zudem kann wie schon vorher erwähnt das Werkzeug vormontiert und einsatzfertig gelagert werden.

Gemäß einer Weiterbildung der Erfindung ist vorgesehen, dass in einer weiteren Ausbaustufe die Werkzeugschnittstelle automatisch in die Drehmomentstütze ein- bzw. ausgewechselt wird. Dabei kann das Fixierelement, wie eine Wellenmutter, durch ein von der Maschine gesteuertes Spannsystem bzw. Fixierelement ersetzt werden. Dies könnte zum Beispiel eine Befestigungsvariante mit einem pneumatischen System oder mechanischen System, wie einem Bajonettverschluss, sein.

Nach dem Lösen der Werkzeugschnittstelle, kann diese von einem Greifer eines Werkzeugwechslers entnommen werden. Der Wechsel der Schnittstelle beinhaltet auch das Wiedereinsetzen der Werkzeugschnittstelle durch den Werkzeugwechsler. Diese Automatisierung hat den Vorteil, dass der Bediener der Maschine keine Werkzeugwechsel mehr vornehmen muss und sich daher um mehr Maschinen kümmern kann, wodurch ein höherer Durchsatz oder geringere Personalkosten realisierbar sind. Zudem werden die Rüstzeiten stark verringert.

Aufgrund des automatisierten Systems innerhalb der Werkzeugmaschine ist es auch denkbar, dass die Drehmomentstütze samt Späneleiteinrichtung automatisiert auf die Werkzeugaufnahme ein- bzw. ausgewechselt werden kann, z.B. mit dem Greifer des Werkzeugwechslers.

### Kurze Beschreibung der Zeichnungen

Weitere Einzelheiten und Vorteile der vorliegenden Erfindung werden anhand der nachfolgenden Beschreibung unter Bezugnahme auf das in den Zeichnungen dargestellte Ausführungsbeispiel näher erläutert. Darin zeigen:
- Fig. 1: eine schematische Seitenansicht einer Ausführungsform eines Werkzeugschnellwechselsystems (mit HSK Aufnahme), das erfindungsgemäß verwendbar ist;
- Fig. 2: eine Längsschnittdarstellung Werkzeugschnellwechselsystems gemäß der Fig. 1 (mit Dorn)
- Fig. 3: eine Draufsicht auf das Werkzeugschnellwechselsystems gemäß der Fig. 1 und Fig. 2
- Fig. 4: eine isometrische Perspektivansicht eines Werkzeugschnellwechselsystems gemäß der Fig. 1

### Ausführliche Beschreibung bevorzugter Ausführungsformen

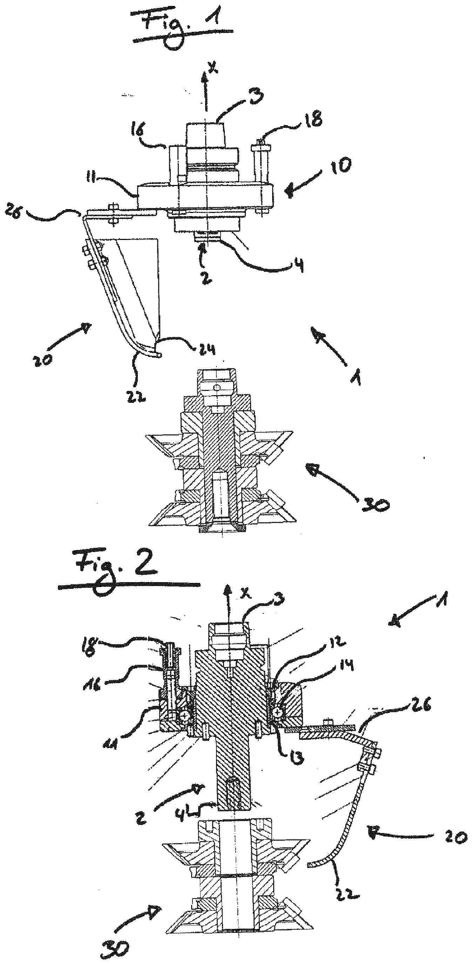

Figur 1 zeigt in einer schematischen Seitenansicht eine Teileanordnung des Werkzeugschnellwechselsystems 1 als erste Ausführungsform eines erfindungsgemäß verwendbaren Systems. Das Werkzeugschnellwechselsystem 1 umfasst eine Drehmomentstütze 10, die über das Gehäuse 11 der Drehmomentstütze mittels einer Befestigungseinrichtung 16 und einer Mitnahmeeinrichtung 18 mit der Werkzeugmaschine verbunden ist. Die Befestigungseinrichtung 16 ist, mit mindestens aber nicht zwingend drei Befestigungspunkten, um die Rotationsachse entlang der X-Richtung gleichmäßig um den Umfang und mit einem festen Radius zum Mittelpunkt verteilt. Die Mitnahmeeinrichtung 18 ist zu einem Teil in der Befestigungseinrichtung 16 fixiert und steht zu einem anderen Teil über diese Befestigungseinrichtung, parallel zur X-Achse und entlang der Drehachse der Befestigungseinrichtung, hinaus. Diese Mitnahmeeinrichtung kann als Stift ausgeführt sein und ist drehfest in der Werkzeugmaschine befestigt, um die Drehmomentstütze simultan mit dem Werkzeugkopf zu bewegen.

Das Werkzeugschnellwechselsystem 1 umfasst ferner eine Späneleiteinrichtung 20, die mit der Drehmomentstütze 10 drehfest verbunden ist. Diese Verbindung wird über eine Stützstruktur 26 sichergestellt. Die Späneleiteinrichtung dient zur Ableitung der beim Bearbeitungsprozess angefallenen Späne und umfasst daher einen Späneleitkörper 22. Dieser umschließt die Bearbeitungszone, mit dem Werkzeug 30, zu einem Teil. Der Späneleitkörper 22 kann dabei in mindestens zwei Bereiche geteilt werden. Der erste Bereich ist mittels der Stützstruktur 26 mit der Drehmomentstütze 10 verbunden. Dieser ist flach ausgebildet, um eine exakte Kontaktfläche zwischen Stützstruktur und Späneleitkörper sicherzustellen. Eine sehr genaue Positionierung ist dadurch möglich. Zusätzlich schafft der gerade Bereich Raum, um die Späne nach dem Durchlaufen eines zweiten, gewölbten Bereichs entsprechend weit vom Werkzeug 30 abzuleiten. Das Werkzeug 30 erfährt so keine Beeinträchtigung durch lose Teile. Der zweite Bereich des Späneleitkörpers 22 besitzt eine gewölbte Form um die Späne wieder in Richtung Werkzeugmaschinenraum zu leiten. Dies kann auch für eine vorhandene Absaugeinrichtung von belangen sein, da so die Späne besser gebündelt werden und eine effizientere Absaugung stattfindet. Um den Auswurf der Späne aus dem Späneleitkörper 22 zu verbessern wurde darüber hinaus ein Ausschnitt 24 im unteren Teil des Körpers geschaffen. Dieser Ausschnitt ist formlich so gestaltet, dass er einen Teil einer Bogenkurve darstellt.

Die für die Bearbeitungsfunktion entscheidende Einheit innerhalb des Werkzeugschnellwechselsystems 1 ist eine Werkzeugschnittstelle 2. Die Schnittstelle stellt in ihrer Form eine Welle dar, erstreckt sich entlang der X-Achse und wird von der Drehmomentstütze 10 umschlossen. Am oberen Ende der Werkzeugschnittstelle 2 befindet sich eine Aufnahme für die Werkzeugmaschine 3. Diese kann nach Belieben des Kunden ausgeführt werden und ist werkzeugmaschinenabhängig. Die andere, untere Seite der Welle weist einen HSK Adapter 4 auf. Diese ist in Figur 1 beispielhaft als HSK-F63 Werkzeugaufnahme dargestellt. Das Festlegen auf ein bestimmtes System ist hier nicht unbedingt nötig und kann vom Kunden, je nach Werkzeug 30, variiert werden.

Die Schnittzeichnung aus Figur 2 zeigt eine alternative Ausführungsform der Werkzeugschnittstelle 2. Diese unterscheidet sich primär dadurch, dass die Werkzeugaufnahme am unteren Teil der Schnittstelle ein anderes Aufnahmesystem verwendet. Die Werkzeugschnittstelle weist in dieser Ausführungsform einen Dorn 4' auf, der das Werkzeug 30 aufnimmt. Die axiale Fixierung des Werkzeuges übernimmt eine Schraube, die in ein Gewinde an dem Dorn 4' geschraubt wird.

Die vorher offenbarten Eigenschaften der Drehmomentstütze 10 und der Späneleiteinrichtung 20 bleiben im Werkzeugschnellwechselsystem 1 aus Figur 2 unverändert bestehen. Zusätzlich zeigt die Schnittzeichnung die Verbindung zwischen Werkzeugschnittstelle 2 und Drehmomentstütze 10. Diese Verbindung ist so ausgeführt, dass zwischen einer Lagereinrichtung 14 und der Schnittstelle eine Hohlwelle 13 positioniert ist, die ein leichteres Auswechseln der Werkzeugschnittstelle ermöglicht. Die Lebensdauer der Lagereinrichtung 14 wird zudem verlängert, da die Hohlwelle 13 maßlich so ausgeführt ist, dass ein ständiges axiales Verrutschen des inneren Lagerringes beim Ein- und Ausbau vermieden wird. Die Werkzeugschnittstelle 2 wird durch ein Fixierelement 12 positioniert und fixiert. Das Fixierelement kann dabei, wie dargestellt, durch eine Wellenmutter mit Keil repräsentiert werden oder aber durch einen anderen Mechanismus. Möglich wäre hier zum Beispiel ein BajonettVerschluss oder eine Bolzen-Ausführung, die mittels Druckluft schließt.

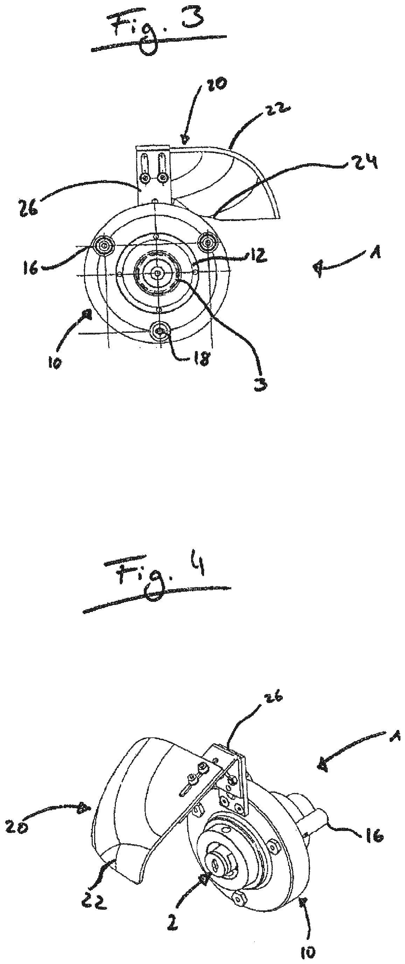

Ein Werkzeugschnellwechselsystem 1 gemäß einer der beiden vorherigen Ausführungsformen ist schematisch in Figur 3 in der Draufsicht dargestellt. Gut zu erkennen ist hier der vorher beschriebene Ausschnitt 24 des Späneleitkörpers 22. Zudem ist die Positionierung der Befestigungseinrichtung 16 und deren Verteilung um die X-Achse gut sichtbar.

Einen vollständigen Überblick über das Werkzeugschnellwechselsystem 1 gibt die perspektivische Figur 4. Dort ist die Ausführungsform aus Figur 1 zu sehen.

Um das Werkzeugschnellwechselsystem 1 betreiben zu können, kann die Drehmomentstütze 10 samt Späneleiteinrichtung 20 am Werkzeugkopf der Werkzeugmaschine montiert werden. Die Werkzeugschnittstelle 2 wird idealerweise vor dem Einbau mit einem Werkzeug 30 versehen. Der Vorteil ist, dass durch die vorherige Montage ein einfacher Auswuchtprozess stattfinden kann. Zudem kann das Werkzeug samt Werkzeugschnittstelle gereinigt werden, ohne dass dadurch die Lagereinrichtung beschädigt wird. Die Werkzeugschnittstelle 2 samt Werkzeug 30 wird anschließend von unten, entlang der X-Achse, in die Hohlwelle 13 der Drehmomentstütze 10 geschoben. Das obere Ende der Schnittstelle 3 wird an der Werkzeugmaschine positioniert bevor die Werkzeugschnittstelle handfest aufgeschoben wird. Durch das Anziehen oder Betätigen des Fixierelements 12 wird die Werkzeugschnittstelle gegen die Wellenschulter der Hohlwelle 13 gedrückt und bildet so einen Formschluss. Gleichzeitig verjüngt das Fixierelement 12, durch einen Keil im Fixierelement, die Hohlwelle 13 und presst diese auf die Werkzeugschnittstelle. Durch die sichere Verbindung der Bauteile ist sichergestellt, dass die Lagereinrichtung 14 bei hohen Drehzahlen der Werkzeugschnittstelle 2 einwandfrei und schadenfrei funktioniert. Es wurde festgestellt, dass diese Verbindung eine positive Auswirkung auf die Genauigkeit bei der Bearbeitung hat.

Die Bearbeitung von bevorzugt plattenförmigen Werkstücken, die bevorzugt zumindest abschnittsweise aus Holz, Holzwerkstoffen oder Kunststoff bestehen, erfolgt nun wie gewohnt. Folgt der Werkzeugkopf der Werkzeugmaschine nun einer Kontur, beim Bearbeiten eines plattenförmigen Werkstückes, wird der Späneleitkörper 22 in einer Weise automatisch nachgeführt, so dass der Späneleitkörper relativ zum Werkstück gesehen immer in derselben Position mitgeführt wird. Dadurch ist es möglich den Späneleitkörper, ohne Nachjustieren über den gesamten Arbeitsprozess, optimal an den Spanflug anzupassen und so die Späne in eine kontrollierte Richtung zu lenken.

Es besteht die Möglichkeit, die Verfahrensschritte zum Einsetzen der Werkzeugschnittstelle 2 automatisiert ablaufen zu lassen. Eine Anpassung der Konstruktion ist nur bedingt nötig. Zudem kann die Werkzeugschnittstelle 2 auch ohne die Drehmomentstütze 10 und das Späneleitelement 20 betrieben werden.

## Patentansprüche

1. Verwendung eines Werkzeugschnellwechselsystems (1) für Werkzeugmaschinen zur Bearbeitung von bevorzugt plattenförmigen Werkstücken, die bevorzugt zumindest abschnittsweise aus Holz, Holzwerkstoffen oder Kunststoff bestehen, mit:
einer Werkzeugschnittstelle (2) zum Ein- und Auswechseln von Bearbeitungswerkzeugen (30),
einer Drehmomentstütze (10), die drehfest mit einer Werkzeugaufnahme der Werkzeugmaschine verbindbar ist, und
einer Späneleiteinrichtung (20) mit einem Späneleitkörper (22), welcher die Späne nach dem Trennen vom Werkstück ableitet und mit der Drehmomentstütze (10) verbunden ist,
wobei
die Werkzeugschnittstelle (2) mittels einer Lagereinrichtung (14) drehbar in der Drehmomentstütze (10) gelagert ist, und
die Werkzeugschnittstelle (2) mittels eines Fixierelements (12) lösbar mit der Lagereinrichtung (14) verbunden ist,
**dadurch gekennzeichnet, dass**
die Drehmomentstütze (10) eine Mitnahmeeinrichtung (18)
besitzt, die in einer C-Achse der Werkzeugmaschine fixiert wird, wobei die Mitnahmeeinrichtung (18) bevorzugt ein Stift ist, wobei ein Gehäuse (11) der Drehmomentstütze (10) durch die Mitnahmeeinrichtung (18) den rotatorischen Bewegungen der C-Achse der Werkzeugaufnahme der Werkzeugmaschine folgt.

2. Verwendung eines Werkzeugschnellwechselsystems (1) nach Anspruch 1, **dadurch gekennzeichnet, dass** der Wirkfläche zwischen Werkzeugschnittstelle (2) und Lagereinrichtung (14) eine Hohlwelle (13) zwischengeschaltet werden kann.

3. Verwendung eines Werkzeugschnellwechselsystems (1) nach Anspruch 1 oder 2, **dadurch gekennzeichnet, dass** die schnelle Lösbarkeit der Werkzeugschnittstelle (2) von der Drehmomentstütze (10) und der Werkzeugmaschine mittels mindestens einem Fixierelement (12), bevorzugt einer Wellenmutter, realisiert werden kann.

4. Verwendung eines Werkzeugschnellwechselsystems (1) nach einem der vorhergehenden Ansprüche, **dadurch gekennzeichnet, dass** die Werkzeugschnittstelle (2) mittels des Fixierelements (12) entfernt und arretiert werden kann.

5. Verwendung eines Werkzeugschnellwechselsystems (1) nach einem der vorherigen Ansprüche, **dadurch gekennzeichnet, dass** die Drehmomentstütze (10) zumindest eine Befestigungseinrichtung (16) aufweist, mittels der sie an der Werkzeugmaschine fixiert werden kann.

6. Verwendung eines Werkzeugschnellwechselsystems (1) nach einem der vorherigen Ansprüche, **dadurch gekennzeichnet, dass** der Späneleitkörper (22) der Späneleiteinrichtung (20) das Werkzeugspannsystem und die Werkzeugschnittstelle (2) über einen Teilumfangsbereich umgibt.

7. Verwendung eines Werkzeugschnellwechselsystems (1) nach einem der vorherigen Ansprüche, **dadurch gekennzeichnet, dass** der Späneleitkörper (22) mindestens zwei Bereiche aufweist, die zumindest eine geradlinige Form bzw. eine gewölbte Form aufweisen.

8. Verwendung eines Werkzeugschnellwechselsystems (1) nach Anspruch 7, **dadurch gekennzeichnet, dass** der Späneleitkörper (22) im Bereich der gewölbten Form und nahe des Werkzeugs einen Ausschnitt (24) aufweist, der Teil einer Bogenkurve ist.

9. Verwendung eines Werkzeugschnellwechselsystems (1) nach einem der vorherigen Ansprüche, **dadurch gekennzeichnet, dass** die Werkzeugschnittstelle (2) an mindestens einem Ende eine Werkzeugaufnahme (4, 4'), insbesondere einen Hohlschaftkegel (HSK), besitzt.

10. Verwendung eines Werkzeugschnellwechselsystems (1) nach einem der vorherigen Ansprüche, **dadurch gekennzeichnet, dass** die Drehmomentstütze (10) ein automatisiertes Spannsystem, insbesondere ein Fixierelement (12), aufweist, mittels dessen die Werkzeugschnittstelle (2) gelöst oder arretiert werden kann.

11. Verwendung eines Werkzeugschnellwechselsystems (1) nach einem der vorherigen Ansprüche, **dadurch gekennzeichnet, dass** die Werkzeugmaschine einen Werkzeugwechsler aufweist, mittels dessen die Werkzeugschnittstelle (2) automatisiert eingesetzt oder herausgenommen werden kann.

## Claims

1. Use of a quick-change tool system (1) for tool machines for machining preferably panel-formed workpieces which preferably consist at least partially of wood, woodbased materials or plastic, with:
a tool interface (2) for installing and exchanging machining tools (30),
a torque support (10) which can be connected nonrotatably with a tool holder of the tool machine, and
a chip guide device (20) with a chip guide body (22) which conducts the chips away after being separated from the workpiece and which is connected with the torque support (10),
wherein the tool interface (2) is mounted rotatably in the torque support (10) by means of a bearing device (14), and
the tool interface (2) is connected detachably with the bearing device (14) by means of a fixing element (12),
**characterised in that** the torque support (10) has a driving device (18) which is fixed in a C axis of the tool machine, wherein the driving device (18) is preferably a pin, wherein the driving device (18) causes a housing (11) of the torque support (10) to follow the rotatory movements of the C axis of the tool holder of the tool machine.

2. Use of a quick-change tool system (1) according to claim 1, **characterised in that** a hollow shaft (13) can be interposed in the active surface between tool interface (2) and bearing device (14).

3. Use of a quick-change tool system (1) according to claim 1 or 2, **characterised in that** the quick release of the tool interface (2) from the torque support (10) and the tool machine can be realised by means of at least one fixing element (12), preferably a shaft nut.

4. Use of a quick-change tool system (1) according to one of the preceding claims, **characterised in that** the tool interface (2) can be removed and locked by means of the fixing element (12).

5. Use of a quick-change tool system (1) according to one of the preceding claims, **characterised in that** the torque support (10) has at least one fixing device(16) by means of which it can be fixed to the tool machine.

6. Use of a quick-change tool system (1) according to one of the preceding claims, **characterised in that** the chip guide body (22) of the chip guide device (20) surrounds the tool clamping system and the tool interface (2) over a partial region of the circumference.

7. Use of a quick-change tool system (1) according to one of the preceding claims, **characterised in that** the chip guide body (22) has at least two regions which have at least a straight linear form or a convex form.

8. Use of a quick-change tool system (1) according to claim 7, **characterised in that** the chip guide body (22) has in the region of the convex form and in proximity to the tool a section (24) which is part of an arched curve.

9. Use of a quick-change tool system (1) according to one of the preceding claims, **characterised in that** the tool interface (2) has at at least one end a tool holder (4, 4'), in particular a hollow shaft cone (HSC).

10. Use of a quick-change tool system (1) according to one of the preceding claims, **characterised in that** the torque support (10) has an automated clamping system, in particular a fixing element (12), by means of which the tool interface (2) can be released or locked.

11. Use of a quick-change tool system (1) according to one of the preceding claims, **characterised in that** the tool machine has a tool changer by means of which the tool interface (2) can be inserted or removed by automated means.

## Revendications

1. Utilisation d'un système de changement rapide d'outil (1) pour des machines-outils à des fins d'usinage de pièces de préférence en forme de plaque, qui sont de préférence constituées au moins par endroits de bois, de matériaux à base de bois ou de plastique, comprenant :
une interface d'outil (2) pour monter et remplacer des outils d'usinage (30),
un support de couple (10) qui peut être fixé de manière solidaire en rotation à un porte-outil de la machine-outil, et
un dispositif de guidage de copeaux (20) doté d'un corps de guidage de copeaux (22) qui évacue les copeaux après la séparation de la pièce à usiner et est fixé au support de couple (10),
dans lequel
l'interface d'outil (2) est montée rotative dans le support de couple (10) au moyen d'un dispositif de palier (14), et
l'interface d'outil (2) est fixée de manière amovible au dispositif de palier (14) au moyen d'un élément de fixation (12),
**caractérisé en ce que**,
le support de couple (10) comporte un dispositif d'entraînement (18) qui est fixé dans un axe C de la machine-outil, dans lequel le dispositif d'entraînement (18) est de préférence une broche, dans lequel ce dispositif d'entraînement (18) permet à un boîtier (11) du support de couple (10) de suivre les mouvements de rotation de l'axe C du porte-outil de la machine-outil.

2. Utilisation d'un système de changement rapide d'outil (1) selon la revendication 1, **caractérisée en ce qu'**un arbre creux (13) peut être interconnecté à la surface active entre l'interface d'outil (2) et le système de changement rapide d'outil (2).

3. Utilisation d'un système de changement rapide d'outil (1) selon la revendication 1 ou 2, **caractérisée en ce que** la libération rapide de l'interface d'outil (2) depuis le support de couple (10) et la machine-outil peut être réalisée au moyen d'au moins un élément de fixation (12), de préférence un écrou d'arbre.

4. Utilisation d'un système de changement rapide d'outil (1) selon l'une quelconque des revendications précédentes, **caractérisée en ce que** l'interface d'outil (2) peut être retirée et verrouillée au moyen de l'élément de fixation (12).

5. Utilisation d'un système de changement rapide d'outil (1) selon l'une quelconque des revendications précédentes, **caractérisée en ce que** le support de couple (10) présente au moins un dispositif de fixation (16), au moyen duquel il peut être fixé à la machine-outil.

6. Utilisation d'un système de changement rapide d'outil (1) selon l'une quelconque des revendications précédentes, **caractérisée en ce que** le corps de guidage de copeaux (22) du dispositif de guidage de copeaux (20) entoure le système de serrage d'outil et l'interface d'outil (2) sur une zone périphérique partielle.

7. Utilisation d'un système de changement rapide d'outil (1) selon l'une quelconque des revendications précédentes, **caractérisée en ce que** le corps de guidage de copeaux (22) présente au moins deux zones qui présentent au moins une forme rectiligne ou une forme incurvée.

8. Utilisation d'un système de changement rapide d'outil (1) selon la revendication 7, **caractérisée en ce que** le corps de guidage de copeaux (22) présente, dans la zone de la forme incurvée et à proximité de l'outil, une découpe (24) qui est une partie d'une courbe incurvée.

9. Utilisation d'un système de changement rapide d'outil (1) selon l'une quelconque des revendications précédentes, **caractérisée en ce que** l'interface d'outil (2) comporte à au moins une extrémité un porte-outil (4, 4'), en particulier un cône creux (HSK).

10. Utilisation d'un système de changement rapide d'outil (1) selon l'une quelconque des revendications précédentes, **caractérisée en ce que** le support de couple (10) présente un système de serrage automatisé, en particulier un élément de fixation (12), au moyen duquel l'interface d'outil (2) peut être libérée ou verrouillée.

11. Utilisation d'un système de changement d'outil rapide (1) selon l'une quelconque des revendications précédentes, **caractérisée en ce que** la machine-outil présente un échangeur d'outil, au moyen duquel l'interface d'outil (2) peut être insérée ou retirée de manière automatisée.
